# EUROPEAN PATENT APPLICATION

(11) **EP 4 109 643 A1**
(43) Date of publication of application: **28.12.2022**
(21) Application number: 21756407.9
(22) Date of filing: 02.02.2021
(51) Int. Cl.: H01M 50/20, H01G 11/12, H01G 11/78

(54) **POWER STORAGE DEVICE**

(30) Priority: 21.02.2020 JP 2020028181
(71) Applicant: GS Yuasa International Ltd., Kisshoin, Minami-ku, Kyoto-shi, Kyoto 601-8520 (JP)
(72) Inventor: USHIJIMA, Osamu, Kyoto-shi, Kyoto 601-8520 (JP)
(74) Representative: Grünecker Patent- und Rechtsanwälte PartG mbB
(86) International application number: PCT/JP2021/003611
(87) International publication number: WO 2021/166625

(57) **Abstract**

An energy storage apparatus (10) includes an energy storage device (210), a spacer (220) disposed in a predetermined direction (Z-axis direction) of the energy storage device (210), and an adhesive layer (270) which is disposed between the energy storage device (210) and the spacer (220) and bonds the energy storage device (210) and the spacer (220) to each other. The spacer (220) includes a first protruding portion (220b) which is disposed at a position adjacent to the adhesive layer (270) in an intersecting direction which intersects the predetermined direction and projects toward the energy storage device (210) and a second protruding portion (220d) which is disposed at a position different from the first protruding portion (220b) and projects toward the energy storage device (210) and has a protrusion height lower than that of the first protruding portion (220b).

## Description

### TECHNICAL FIELD

The present invention relates to an energy storage apparatus including an energy storage device and a spacer.

### BACKGROUND ART

Conventionally, there has been known an energy storage apparatus which includes an energy storage device and a spacer and in which the energy storage device is bonded to the spacer with an adhesive layer. For example, patent document 1 discloses an assembled battery (energy storage apparatus) which includes a plurality of battery cells (energy storage devices) and a separator (spacer) and in which the battery cells and the separator are bonded to each other with an adhesive (adhesive layer).

### PRIOR ART DOCUMENT

### PATENT DOCUMENT

Patent Document 1: JP-A-2012-119156

### SUMMARY OF THE INVENTION

### PROBLEMS TO BE SOLVED BY THE INVENTION

In the energy storage apparatus having the above conventional configuration, there is a possibility that the adhesiveness between the energy storage device and the spacer decreases. That is, in the energy storage apparatus having the configuration in which the energy storage device and the spacer are adhered to each other with the adhesive layer as described above in the prior art, the adhesive layer may be compressed because the thickness of the adhesive layer varies due to the dimensional tolerance of each component. Further, the energy storage device expands with use, and repeatedly expands and contracts due to charging and discharging, so that the adhesive layer is also compressed and a repeated stress is applied to the adhesive layer. Accordingly, in the energy storage apparatus having the above conventional configuration, there is a possibility that the adhesiveness between the energy storage device and the spacer decreases due to the excessive compression of the adhesive layer between the energy storage device and the spacer or the reception of a repeated stress in a compressed state.

The present invention has been made by the inventor of the present application in view of the above problems, and an object of the present invention is to provide an energy storage apparatus that can improve the adhesiveness between an energy storage device and a spacer.

### MEANS FOR SOLVING THE PROBLEMS

In order to achieve the above object, an energy storage apparatus according to one aspect of the present invention includes an energy storage device, a spacer disposed in a predetermined direction of the energy storage device, and an adhesive layer which is disposed between the energy storage device and the spacer and bonds the energy storage device and the spacer to each other. The spacer includes a first protruding portion which is disposed at a position adjacent to the adhesive layer in an intersecting direction intersecting the predetermined direction and protrudes toward the energy storage device and a second protruding portion which is disposed at a position different from the first protruding portion, protrudes toward the energy storage device, and has a protrusion height lower than a protrusion height of the first protruding portion.

According to this configuration, in the energy storage apparatus, the spacer includes the first protruding portion which is disposed at a position adjacent to the adhesive layer which bonds the energy storage devices and the spacer to each other and the second protruding portion which is lower in protrusion height than the first protruding portion. As described above, in the spacer, since the first protruding portion is disposed at the position adjacent to the adhesive layer, even when the thickness of the adhesive layer varies due to dimensional tolerance or the like of the component, the variation can be absorbed by crushing the first protruding portion. Further, even when the energy storage device expands, the expansion of the energy storage device can be absorbed as the first protruding portion is crushed. Further, since the spacer is provided with the second protruding portion having a protrusion height lower than that of the first protruding portion, it is possible to suppress the first protruding portion from being crushed too much by the second protruding portion. For this reason, it is possible to maintain an appropriate thickness of the adhesive layer between the energy storage device and the spacer, and it is possible to suppress the adhesive layer from being excessively compressed or receiving a repeated stress in an excessively compressed state. With such a configuration, it is possible to improve adhesiveness between the energy storage device and the sp acer.

The second protruding portion may be disposed at a position facing a central portion of the energy storage device.

With such a configuration, the central portion of the energy storage device is easily swelled, and hence the second protruding portion of the spacer is disposed at a position facing the central portion of the energy storage device. With such a configuration, it is possible to suppress the swelling of the central portion of the energy storage device, and hence it is possible to effectively suppress the excessive compression of the adhesive layer. By disposing the second protruding portion at a position facing the central portion of the energy storage device, the adhesive layer is disposed at a position not facing the central portion. The central portion of the energy storage device is likely to repeatedly expand and contract due to charging and discharging. Therefore, by disposing the adhesive layer at a position not facing the central portion, it is possible to suppress the adhesive layer from receiving repeated stress due to the expansion and contraction of the energy storage device. With such a configuration, it is possible to improve adhesiveness between the energy storage device and the spacer.

The spacer may include the two first protruding portions at positions sandwiching the adhesive layer in the intersecting direction.

In addition, since the spacer includes the two first protruding portions at positions sandwiching the adhesive layer, it is possible to suppress the adhesive layer from protruding from a predetermined position (between the two first protruding portions). With such a configuration, the adhesive layer can be disposed at an appropriate position by the two first protruding portions, and hence adhesiveness between the energy storage device and the spacer can be enhanced.

The spacer may further include a third protruding portion which is disposed between the first protruding portion and the second protruding portion and has a protrusion height lower than a protrusion height of the first protruding portion.

According to this configuration, the spacer includes the third protruding portion having a protrusion height lower than that of the first protruding portion between the first protruding portion and the second protruding portion. As described above, the third protruding portion, which is the protruding portion having the projection height lower than that of the first protruding portion, is disposed in the spacer in addition to the second protruding portion. This can further suppress the first protruding portion from being excessively crushed. As a result, it is possible to further suppress the adhesive layer from being excessively compressed or receiving repeated stress in an excessively compressed state, and hence it is possible to enhance the adhesiveness between the energy storage device and the spacer.

The energy storage device may include an electrode assembly including a flat portion formed at a position facing the spacer, and at least a part of the adhesive layer may be disposed at a position not overlapping the flat portion when viewed from the predetermined direction.

In the energy storage device, a portion facing the flat portion of the electrode assembly is likely to expand with use, and expansion and contraction are likely to be repeated by charging and discharging. Therefore, at least a part of the adhesive layer is disposed at a position not overlapping the flat portion. With such a configuration, it is possible to suppress the adhesive layer from being excessively compressed or receiving repeated stress due to the expansion of the energy storage device, and hence the adhesiveness between the energy storage device and the spacer can be enhanced.

The present invention can be implemented not only as an energy storage apparatus but also as a spacer.

### ADVANTAGES OF THE INVENTION

According to the energy storage apparatus of the present invention, it is possible to improve the adhesiveness between the energy storage device and the spacer.

### BRIEF DESCRIPTION OF THE DRAWINGS

Fig. 1 is a perspective view showing an external appearance of an energy storage apparatus according to an embodiment.
Fig. 2 is a perspective view showing the inside of an outer case by separating the body and the lid of the outer case in the energy storage apparatus according to the embodiment.
Fig. 3 is an exploded perspective view showing constituent elements inside the outer case of the energy storage apparatus according to the embodiment in an exploded state.
Fig. 4 is an exploded perspective view showing the respective constituent elements of the energy storage unit according to the embodiment in an exploded state.
Fig. 5 is an exploded perspective view showing the respective constituent elements of the energy storage device according to the embodiment in an exploded state.
Fig. 6 is a perspective view and a cross-sectional view showing the configuration of the spacer according to the embodiment.
Fig. 7 is a plan view showing the positional relationship between the configuration of the spacer and the energy storage device according to the embodiment.
Fig. 8 is a cross-sectional view showing a state where the spacer and the energy storage device according to the embodiment are bonded to each other with an adhesive layer.

### MODE FOR CARRYING OUT THE INVENTION

An energy storage apparatus according to an embodiment of the present invention (including its modification example) will be described below with reference to the accompanying drawings. Note that the embodiment described below shows a comprehensive or specific example. Numerical values, shapes, materials, constituent elements, placement positions and connection modes of the constituent elements, manufacturing processes, the order of the manufacturing processes, and the like presented in the following embodiment are merely examples, and are not intended to limit the present invention. In each drawing, dimensions and the like are not strictly shown. In the drawings, the same or similar constituent elements are denoted by the same reference numerals.

In the following description and drawings, the direction defined as a X-axis direction is a longitudinal direction of the outer case of the energy storage apparatus, an array direction of the energy storage unit and the electric equipment, an array direction of a pair of side plates, an extending direction of a pair of end plates, a direction in which short side surfaces of the case of the energy storage device face each other, or an array direction of a pair of electrode terminals in one energy storage device. The direction defined as a Y-axis direction is an array direction of the energy storage device and a bus bar or a bus bar frame or an array direction of the body of the case and the lid of the energy storage device. The direction defined as a Z-axis direction is an array direction of the body and the lid of the outer case of the energy storage apparatus, an array direction of a pair of end plates, an array direction of the energy storage device and the end plates, a direction in which long side surfaces of the cases of the energy storage devices face each other, a flattening direction of the energy storage devices, a stacking direction of the plates of the electrode assembly of the energy storage devices, or a vertical direction. The X-axis direction, the Y-axis direction, and the Z-axis direction are directions intersecting (orthogonal in this embodiment) each other. Although the Z-axis direction may not be the vertical direction depending on the usage mode, the Z-axis direction will be described below as the vertical direction for convenience of description.

In the following description, for example, an X-axis positive direction indicates the arrow direction of the X axis, and an X-axis negative direction indicates a direction opposite to the X-axis positive direction. The same applies to the Y-axis direction and the Z-axis direction. In addition, hereinafter, the Z-axis direction may also be referred to as a predetermined direction, and a direction intersecting the predetermined direction (any direction in the XY plane) may also be referred to as an intersecting direction. Furthermore, expressions indicating relative directions or postures, such as parallel and orthogonal, strictly include cases where the directions or postures are not the same. For example, two directions being orthogonal to each other not only means that the two directions are completely orthogonal to each other, but also means that the two directions are substantially orthogonal to each other, that is, the two directions include a difference of, for example, about several percent.

### (Embodiment)

### [1 General description of energy storage apparatus 10]

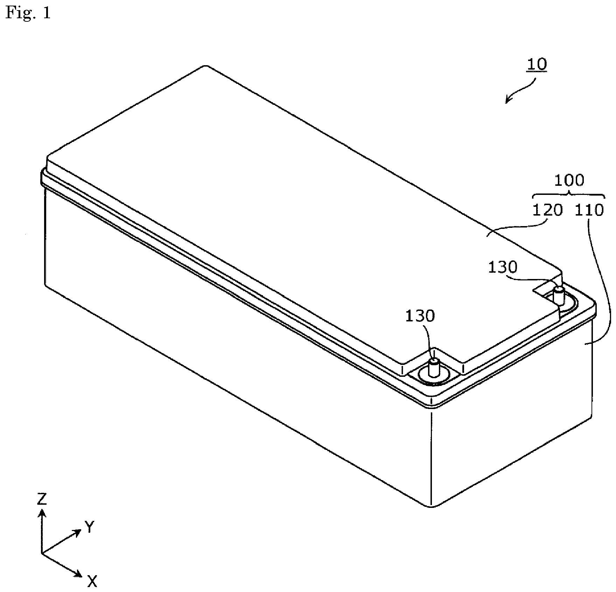

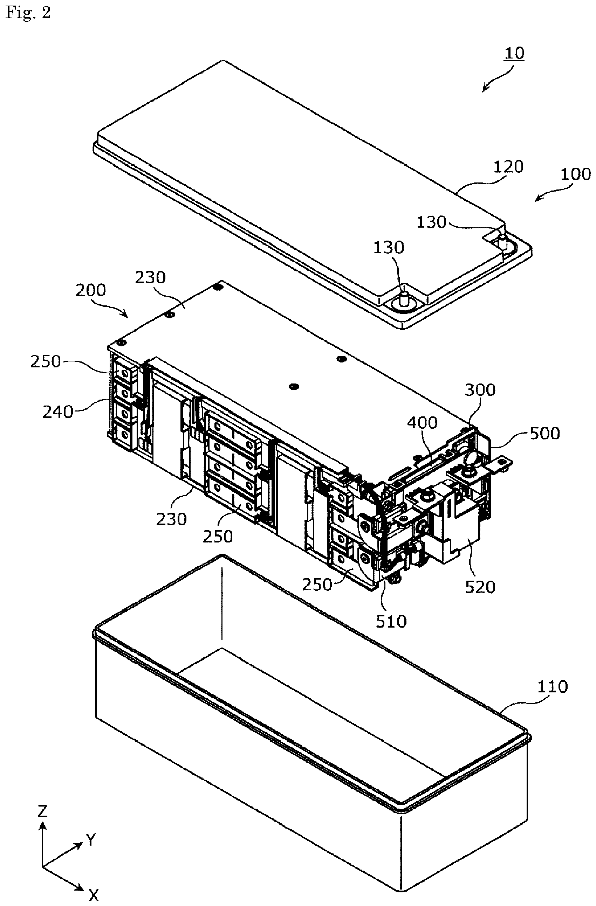

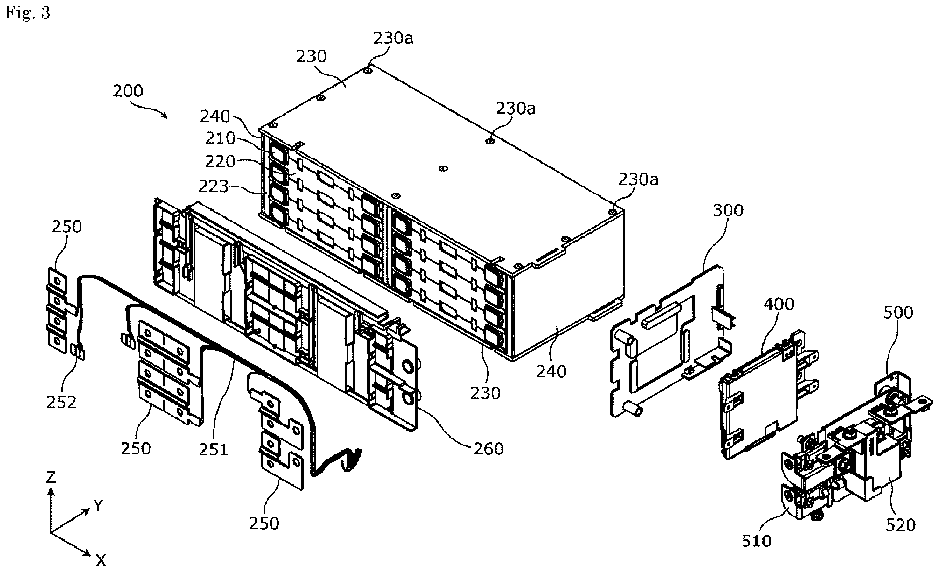

A schematic configuration of an energy storage apparatus 10 according to the present embodiment will be described first. Fig. 1 is a perspective view showing an external appearance of the energy storage apparatus 10 according to this embodiment. Fig. 2 is a perspective view showing the inside of an outer case 100 by separating the body and the lid of the outer case 100 in the energy storage apparatus 10 according to the embodiment. Fig. 3 is an exploded perspective view showing constituent elements inside the outer case 100 of the energy storage apparatus 10 according to the embodiment in an exploded state.

The energy storage apparatus 10 is an apparatus capable of charging electricity from the outside and discharging electricity to the outside and has a substantially rectangular parallelepiped shape in this embodiment. For example, the energy storage apparatus 10 is a battery module (assembled battery) used for power storage applications, power supply applications, and the like. More specifically, the energy storage apparatus 10 is used as, for example, a battery for driving or starting the engine of a moving body such as an automobile, a motorcycle, a watercraft, a ship, a snowmobile, an agricultural machine, a construction machine, or a railway vehicle for an electric railway. Examples of the automobile include an electric vehicle (EV), a hybrid electric vehicle (HEV), a plug-in hybrid electric vehicle (PHEV), and a gasoline vehicle. Examples of the railway vehicle for an electric railway include a train, a monorail, and a linear motor car. The energy storage apparatus 10 can also be used as a stationary battery or the like used for home use, a generator, or the like.

As shown in Figs. 1 to 3, the energy storage apparatus 10 includes the outer case 100, an energy storage unit 200 housed in the outer case 100, an attachment member 300, electric equipment 400, and a bus bar unit 500. In addition to the above constituent elements, the energy storage apparatus 10 may include an exhaust portion for exhausting the gas discharged from the energy storage unit 200 to the outside of the outer case 100, an a connector connected to the electric equipment 400 via an electric wire or the like for transmitting a signal to the outside.

The outer case 100 is a case (module case) having a box shape (substantially rectangular parallelepiped shape) which forms the outer case of the energy storage apparatus 10. That is, the outer case 100 is disposed outward the energy storage unit 200, the electric equipment 400, and the like, fixes the energy storage unit, the electric equipment, and the like at predetermined positions, and protects the energy storage unit 200, the electric equipment 400, and the like from an impact or the like. The outer case 100 is formed of, for example, an insulating member such as polycarbonate (PC), polypropylene (PP), polyethylene (PE), polystyrene (PS), a polyphenylene sulfide resin (PPS), polyphenylene ether (PPE (including modified PPE)), polyethylene terephthalate (PET), polybutylene terephthalate (PBT), polyether ether ketone (PEEK), tetrafluoroethylene-perfluoroalkyl vinyl ether (PFA), polytetrafluoroethylene (PTFE), polyether sulfone (PES), or an ABS resin, a composite material thereof, or an insulation-coated metal. This allows the outer case 100 to prevent the energy storage unit 200, the electric equipment 400, and the like from coming into contact with an external metal member or the like. The outer case 100 may be formed of a conductive member such as a metal as long as the electric insulation property of the energy storage unit 200, the electric equipment 400, and the like is maintained.

The outer case 100 includes an outer case body 110 which forms the body of the outer case 100 and an outer case lid body 120 which forms the lid body of the outer case 100. The outer case body 110 is a bottomed rectangular prismatic housing (housing) in which an opening is formed and houses energy storage devices 210, the electric equipment 400, and the like. The outer case lid body 120 is a flat rectangular member which closes the opening of the outer case body 110. The outer case lid body 120 is preferably joined to the outer case body 110 in an airtight or watertight state by an adhesive, heat sealing, ultrasonic welding, or the like. External terminals 130 which are a pair of module terminals (total terminals) on the positive electrode side and the negative electrode side are disposed on the outer case lid body 120. The energy storage apparatus 10 charges electricity from the outside and discharges electricity to the outside through the pair of external terminals 130. The external terminal 130 is formed of, for example, a conductive member made of a metal such as aluminum, an aluminum alloy, copper, or a copper alloy.

The energy storage unit 200 has the plurality of energy storage devices 210 stacked flat in the Z-axis direction and arrayed in the X-axis direction while being horizontally disposed (laid down), thereby having a shape which is flat in the Z-axis direction and elongated in the X-axis direction. More specifically, the energy storage unit 200 is configured such that the plurality of energy storage devices 210 arranged in the Z-axis direction and the X-axis direction are sandwiched between a pair of end plates 230 and a pair of side plates 240 in the Z-axis direction and the X-axis direction together with spacers 220 and 223. The configuration of the energy storage unit 200 will be described in more detail later.

The electric equipment 400 is equipment capable of monitoring a state of the energy storage device 210 included in the energy storage unit 200 and controlling the energy storage device 210 and is attached to the energy storage unit 200. In the present embodiment, the electric equipment 400 is a flat rectangular member disposed at an end portion of the energy storage unit 200 in the longitudinal direction, that is, in the X-axis positive direction of the energy storage unit 200. The electric equipment 400 includes, for example, electric components such as a circuit board, a shunt resistor, and a connector which monitor the charge state and discharge state of the energy storage device 210 and control charging and discharging of the energy storage device 210. The electric equipment 400 has a configuration in which these electric components are housed in an insulating cover member.

The attachment member 300 is a member for attaching the electric equipment 400 to the energy storage unit 200. That is, the attachment member 300 is a flat plate member which is disposed between the energy storage unit 200 and the electric equipment 400 and attached to the energy storage unit 200 and to which the electric equipment 400 is attached. The attachment member 300 is formed of, for example, any electrically insulating resin material or the like that can be used for the outer case 100.

The attachment member 300 is disposed to face a surface of the energy storage unit 200 which is different from the surface on which the electrode terminals of the energy storage devices 210 are disposed. More specifically, the attachment member 300 is disposed in the X-axis direction of the energy storage unit 200. In the present embodiment, the attachment member 300 is attached to the side surface of the energy storage unit 200 in the X-axis positive direction so as to be attached to the side surface of the energy storage unit 200 in the X-axis positive direction in a posture where the electric equipment 400 is erected (a posture parallel to the YZ plane). The attachment member 300 is attached to at least one of the pair of end plates 230 of the energy storage unit 200 and the side plates 240 which connect the pair of end plates 230 to each other. In the present exemplary embodiment, the attachment member 300 is attached to each of the pair of end plates 230 and the side plate 240 in the X-axis positive direction.

The bus bar unit 500 is a member that electrically connects the energy storage unit 200 and the electric equipment 400, electrically connects the electric equipment 400 and the external terminal 130, and electrically connects the energy storage unit 200 and the external terminal 130. The bus bar unit 500 includes a bus bar 510 and a relay 520.

The bus bar 510 is a plate-like member that connects a bus bar 250 (to be described later) of the energy storage unit 200 and the electric equipment 400, connects the electric equipment 400 and the external terminal 130, connects the bus bar 250 and the relay 520, and connects the relay 520 and the external terminal 130. In the present embodiment, the bus bar 510 is connected (joined) to the bus bar 250, the electric equipment 400, the external terminal 130, or the relay 520 by bolt fastening, but may be connected (joined) to the bus bar 250, the electrical equipment, the external terminal 130, or the relay 520 by welding, swaging, or the like. The bus bar 510 is formed of, for example, a conductive member made of a metal such as aluminum, an aluminum alloy, copper, a copper alloy, or nickel, or a combination thereof, or a conductive member other than a metal. The relay 520 is a relay (electric relay) disposed between the energy storage unit 200 and the external terminal 130 via the bus bar 510.

### [2 Description of configuration of energy storage unit 200]

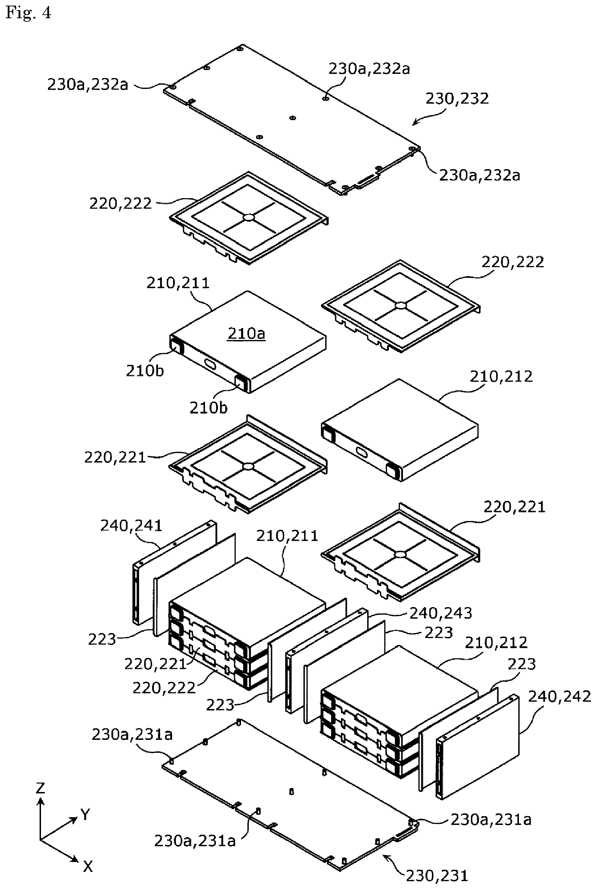

The configuration of the energy storage unit 200 will be described next in detail with reference to Fig. 4 in addition to Fig. 3. Fig. 4 is an exploded perspective view showing the respective constituent elements of the energy storage unit 200 according to the embodiment in an exploded state. Fig. 4 omits the illustration of the bus bars 250 and the bus bar frame 260 of the energy storage unit 200.

As shown in Figs. 3 and 4, the energy storage unit 200 includes energy storage devices 210 (211, 212), spacers 220 (221, 222) and 223, end plates 230 (231, 232), side plates 240 (241, 242, 243), the bus bars 250, and a bus bar frame 260.

The energy storage device 210 is a secondary battery (battery cell) capable of charging and discharging electricity, and more specifically, is a nonaqueous electrolyte secondary battery such as a lithium ion secondary battery. The energy storage device 210 has a flat rectangular parallelepiped shape (prismatic shape). In the present embodiment, the eight energy storage devices 210 are arrayed in the Z-axis direction and the X-axis direction in a state where the energy storage devices are horizontally placed (laid down) (in a state where the long side surfaces of the energy storage devices 210 face the Z-axis direction). More specifically, the four first energy storage devices 211 disposed on the X-axis negative direction side are stacked (stacked flat) in the Z-axis direction, and the four second energy storage devices 212 disposed on the X-axis positive direction side are stacked (stacked flat) in the Z-axis direction. The four first energy storage devices 211 and the four second energy storage devices 212 are arranged side by side in the X-axis direction. The configuration of the energy storage device 210 will be described in detail later.

The number of the energy storage devices 210 is not particularly limited, and any number of the energy storage devices 210 may be stacked (stacked flat) in the Z-axis direction, or any number of the energy storage devices 210 may be arrayed in the X-axis direction. That is, the energy storage unit 200 may include only one energy storage device 210. The shape of the energy storage device 210 is not limited to the above prismatic shape and may be a polygonal columnar shape, a cylindrical shape, an elliptical columnar shape, an oval columnar shape, or the like other than the above prismatic shape. The energy storage device 210 is not limited to a nonaqueous electrolyte secondary battery and may be a secondary battery other than the nonaqueous electrolyte secondary battery, or may be a capacitor. The energy storage device 210 may be not a secondary battery but a primary battery that allows the user to use stored electricity without charged electricity. The energy storage device 210 may be a laminate-type energy storage device.

The spacers 220 (221, 222) and 223 are flat-plate like and rectangular members which are disposed adjacent to the energy storage devices 210 on sides (in the Z-axis direction or X-axis direction) of the energy storage devices 210 and electrically insulate the energy storage devices 210 from other members. The spacers 220 and 223 are formed of, for example, any electrically insulating resin material or the like that can be used for the outer case 100.

More specifically, the spacer 221 is an intermediate spacer (inter-cell spacer) which is disposed in a predetermined direction (Z-axis direction) of the energy storage device 210. That is, the spacer 221 is disposed between the two energy storage devices 210 disposed adjacent to each other (between the two first energy storage devices 211 and between the two second energy storage devices 212) and electrically insulates the two energy storage devices 210 from each other. In the present embodiment, the three spacers 221 are disposed in correspondence with the four first energy storage devices 211. However, when the number of the first energy storage devices 211 is other than four, the number of the spacers 221 is also appropriately changed according to the number of the first energy storage devices 211. The same applies to the second energy storage device 212.

The spacer 222 is an end spacer disposed in a predetermined direction (Z-axis direction) of the energy storage device 210 at an end portion. That is, the spacer 222 is disposed between the energy storage device 210 at the end portion (the first energy storage device 211 and the second energy storage device 212 at the end portion) and the end plate 230 (231, 232) and electrically insulates the energy storage device 210 at the end portion from the end plate 230 (231, 232). That is, the two spacers 222 are disposed on both sides in the Z-axis direction of the four first energy storage devices 211, and the two spacers 222 are disposed on both sides in the Z-axis direction of the four second energy storage devices 212. The configuration of the spacers 220 (spacers 221 and 222) will be described in detail later.

The spacer 223 is disposed between the energy storage device 210 and the side plate 240 (241, 242, 243) and electrically insulates the energy storage device 210 from the side plate 240 (241, 242, 243). That is, two spacers 223 are disposed between the four first energy storage devices 211 and the side plates 241 and 243 on both sides of the four first energy storage devices 211 in the X-axis direction. The two spacers 223 are disposed between the four second energy storage devices 212 and the side plates 242 and 243 on both sides of the four second energy storage devices 212 in the X-axis direction.

The end plate 230 and the side plate 240 are members (constraint members) which press (constrain) the energy storage devices 210 from the outside in the Z-axis direction. That is, the end plate 230 and the side plate 240 press (constrain) the respective energy storage devices 210 and the plurality of spacers 220 from both sides in the Z-axis direction by sandwiching the plurality of energy storage devices 210 and the plurality of spacers 220 from both sides in the Z-axis direction. The end plate 230 and the side plate 240 are formed of, for example, a metal member made of stainless steel, aluminum, an aluminum alloy, iron, a plated steel plate, or the like but may be formed of an insulating member made of a resin having high rigidity or the like.

The end plates 230 (231, 232) are a pair of flat plate-like members which are disposed at positions sandwiching the plurality of energy storage devices 210 (the plurality of first energy storage devices 211 and the plurality of second energy storage devices 212) and the plurality of spacers 220 in the Z-axis direction and sandwich them in the Z-axis direction. With such a configuration, the pair of end plates 230 collectively constrain the plurality of energy storage devices 210 and the plurality of spacers 220 in the Z-axis direction (collectively apply a constraining force in the Z-axis direction to the plurality of energy storage devices 210 and the plurality of spacers 220). The end plate 231 is the end plate 230 of the pair of end plates 230 which is located on the Z-axis negative direction side, and the end plate 232 is the end plate 230 on the Z-axis positive direction side.

The side plate 240 (241, 242, 243) is a flat plate-like member which has both ends attached to the pair of end plates 230 and connects the pair of end plates 230 to each other, thereby constraining the plurality of energy storage devices 210 and the plurality of spacers 220. That is, the side plate 240 extends in the Z axis direction across the plurality of energy storage devices 210 and the plurality of spacers 220 and applies a constraining force in the array direction (Z-axis direction) to the plurality of energy storage devices 210 and the like.

In the present embodiment, the side plate 241 is disposed in the X-axis negative direction of the first energy storage device 211, the side plate 242 is disposed in the X-axis positive direction of the second energy storage device 212, and the side plate 243 is disposed between the first energy storage device 211 and the second energy storage device 212. The side plates 241, 242, and 243 are respectively attached to both end portions and the central portion of the pair of end plates 230 in the X-axis direction at both end portions in the Z-axis direction. The side plate 240 is provided with a through hole extending through in the Y-axis direction for weight reduction and the like, but the through hole may not be provided.

As described above, the end plate 230 and the side plate 240 sandwich and constrain the plurality of energy storage devices 210 and the plurality of spacers 220 from both sides in the X-axis direction and both sides in the Z-axis direction. The end plate 230 (231, 232) and the side plates 240 are connected (joined) to each other by a plurality of connecting members 230a (231a, 232a) arranged in the Y-axis direction. In the present embodiment, the connecting member 230a is a bolt that extends through the end plate 230 and is threadably engaged with a female thread portion formed on the side plate 240 to connect (fasten) the end plate 230 and the side plate 240. The arrangement positions and the number of connecting members 230a are not specifically limited. In addition, a method of connecting the end plate 230 and the side plate 240 may be another method. For example, welding, caulked joining, bonding, deposition, or the like may be used.

The bus bars 250 are flat plate-like members connected to the energy storage devices 210. More specifically, the bus bars 250 are disposed in the Y-axis negative direction of the plurality of energy storage devices 210 and are connected (joined) to the electrode terminals of the plurality of energy storage devices 210 and the bus bars 510. That is, the bus bars 250 connect the electrode terminals of the plurality of energy storage devices 210 to each other and connect the electrode terminals of the energy storage devices 210 at the end portions to the bus bars 510. In the present embodiment, the bus bars 250 and the electrode terminals of the energy storage devices 210 are connected (joined) to each other by welding, but may be connected (joined) to each other by bolt fastening or the like. The bus bar 250 is formed of, for example, any material or the like that can be used for the bus bar 510. In the present embodiment, the bus bars 250 form four sets of energy storage device groups by connecting the energy storage devices 210 in twos in parallel and connect the four sets of energy storage device groups in series. However, the bus bars 250 may connect all the eight energy storage devices 210 in series or may have other configurations.

An electric wire 251 for detecting a voltage or the like is connected to the bus bar 250. The electric wire 251 is also connected to the electric equipment 400 and transmits information such as the voltage of the energy storage device 210 to the electric equipment 400. The electric wire 251 is also connected to a thermistor 252, and the temperature information of the energy storage device 210 is also transmitted to the electric equipment 400.

The bus bar frame 260 is a flat rectangular insulating member capable of electrically insulating the bus bars 250 from other members and regulating the positions of the bus bars 250. The bus bar frame 260 is formed of, for example, any electrically insulating resin material or the like that can be used for the outer case 100. The bus bar frame 260 is disposed in the Y-axis negative direction of the plurality of energy storage devices 210 and is positioned with respect to the plurality of energy storage devices 210. More specifically, the bus bar frame 260 is attached to at least one end plate 230 of the pair of end plates 230 (on the present embodiment, both end plates 230). The bus bar 250, the electric wire 251, and the thermistor 252 are positioned on the bus bar frame 260. With such a configuration, the bus bars 250 are positioned with respect to the plurality of energy storage devices 210 and are joined to the electrode terminals which the plurality of energy storage devices 210 have.

### [3 Description of configuration of energy storage device 210]

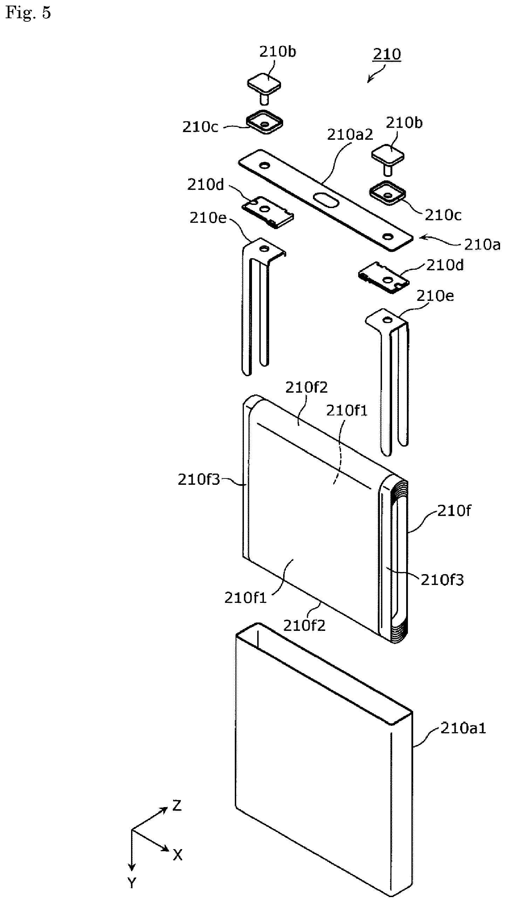

The configuration of the energy storage device 210 will be described next in detail. Fig. 5 is an exploded perspective view showing the respective constituent elements of the energy storage device 210 according to the embodiment in an exploded state. More specifically, Fig. 5 is an exploded view of respective portions of the energy storage device 210 shown in Fig. 4 in a state where the energy storage device is vertically disposed (erected). Since the eight energy storage devices 210 (the four first energy storage devices 211 and the four second energy storage devices 212) all have the same configuration, the configuration of one energy storage device 210 will be described below.

As shown in Fig. 5, the energy storage device 210 includes a case 210a, a pair of electrode terminals 210b (on the positive electrode side and the negative electrode side) and a pair of upper gaskets 210c (on the positive electrode side and the negative electrode side). The case 210a houses a pair of lower gaskets 210d (on the positive electrode side and the negative electrode side), a pair of current collectors 210e (on the positive electrode side and negative electrode side), and an electrode assembly 210f. Although an electrolyte solution (nonaqueous electrolyte) is sealed in the case 210a, the illustration is omitted. The type of electrolyte solution is not particularly limited as long as it does not impair the performance of the energy storage device 210, and various types of electrolytes can be selected. In addition to the above constituent elements, a spacer disposed on a side, a lower side, or the like of the electrode assembly 210f, an insulating film enclosing the electrode assembly 210f or the like, an insulating sheet covering an outer surface of the case 210a, or the like may be disposed.

The case 210a is a rectangular parallelepiped (prismatic or box-shaped) case having a case main body 210al in which an opening is formed and a case lid portion 210a2 that closes the opening of the case main body 210a1. With such a configuration, the case 210a has a structure in which, after the electrode assembly 210f and the like are accommodated in the case main body 210al, the inside of the case can be sealed by, for example, welding the case main body 210a1 and the case lid portion 210a2. The material for the case main body 210a1 and the case lid portion 210a2 is not particularly limited, but is preferably a weldable metal such as stainless steel, aluminum, an aluminum alloy, iron, or a plated steel plate.

The case main body 210al is a rectangular prismatic member having a bottom and constituting the main body portion of the case 210a, and has an opening on the Y-axis negative direction side. That is, the case main body 210al has a pair of rectangular and planar (flat) long side surfaces on both side surfaces in the Z-axis direction, a pair of rectangular and planar (flat) short side surfaces on both side surfaces in the X-axis direction, and a rectangular and planar (flat) bottom surface on the Y-axis positive direction side. The case lid portion 210a2 is a rectangular plate-like member constituting the lid portion of the case 210a and is arranged to extend in the X-axis direction on the Y-axis negative direction side of the case main body 210a1.

The electrode assembly 210f is an energy storage element (power generating element) formed by stacking a positive electrode plate, a negative electrode plate, and a separator. The positive electrode plate is formed by forming a positive active material layer on a positive electrode substrate layer which is a current collecting foil made of metal such as aluminum or an aluminum alloy. The negative electrode plate is obtained by forming a negative active material layer on a negative electrode substrate layer which is a current collecting foil made of metal such as copper or a copper alloy. As an active material used for the positive active material layer and the negative active material layer, a known material can be appropriately used as long as it can occlude and release lithium ions. In the present embodiment, the electrode assembly 210f is a winding-type (so-called vertical winding-type) electrode assembly formed by winding plates (positive electrode plate and negative electrode plate) around a winding axis (a virtual axis parallel to the X-axis direction) extending in the X-axis direction.

In this case, since the plates (the positive electrode plate and the negative electrode plate) of the electrode assembly 210f are stacked in the Z-axis direction, the Z-axis direction is also referred to as a stacking direction. That is, the electrode assembly 210f is formed by stacking plates in the stacking direction. The electrode assembly 210f has a pair of flat portions 210f1 arranged in the Z-axis direction and a pair of curved portions 210f2 arranged in the Y-axis direction by winding plates, and the stacking direction is the stacking direction of the plates of the flat portions 210f1. The flat portion 210f1 is a flat portion connecting the end portions of the pair of curved portions 210f2, and the curved portion 210f2 is a portion curved in a semicircular shape or the like so as to protrude in the Y-axis direction. In addition, the direction in which the flat surface of the flat portion 210f1 faces or the opposing direction of the pair of flat portions 210f1 can also be defined as the stacking direction. Accordingly, it can be said that the plurality of first energy storage devices 211 are arranged in the stacking direction and the plurality of second energy storage devices 212 are also arranged in the stacking direction. The X-axis direction in which the first energy storage devices 211 and the second energy storage devices 212 are arranged is also referred to as an array direction. That is, the first energy storage device 211 and the second energy storage device 212 are arrayed in an array direction intersecting with the stacking direction.

Since the electrode assembly 210f has the positive electrode plate and the negative electrode plate wound so as to be shifted from each other in the X-axis direction, the positive electrode plate and the negative electrode plate have a portion (active material layer non-forming portion) where no active material is formed (coated) and a base material layer is exposed at an end portion in the direction in which the respective plates are shifted. That is, the electrode assembly 210f has, at both end portions in the X-axis direction, connecting portions 210f3 which protrude from the flat portion 210f1 and the curved portion 210f2 toward both sides in the X-axis direction and are connected to the current collector 210e by laminating active material layer non-forming portions of the positive electrode plate and the negative electrode plate.

The electrode assembly 210f may be an electrode assembly in any form such as a so-called horizontal winding-type electrode assembly formed by winding plates around a winding axis extending in the Y-axis direction, a stacking-type (stack-type) electrode assembly formed by stacking a plurality of plate-shaped plates, or a bellows-type electrode assembly formed by folding the plates in a bellows shape. In the case of the horizontal winding-type electrode assembly, flat portions other than the curved portion and the connecting portions (tabs) with the current collector are flat portions. In the case of the stacking-type (stack-type) electrode assembly and the bellows-type electrode assembly, flat portions other than the connecting portions (tabs) with the current collector are flat portions.

The electrode terminal 210b is a terminal (a positive electrode terminal and a negative electrode terminal) of the energy storage device 210 and is disposed on the case lid portion 210a2 so as to protrude in the -Y-axis direction. The electrode terminal 210b is electrically connected to the positive electrode plate and the negative electrode plate of the electrode assembly 210f via the current collector 210e. The electrode terminal 210b is formed of a conductive member made of metal such as aluminum, an aluminum alloy, copper, or a copper alloy.

The current collector 210e is a conductive member (a positive electrode current collector and a negative electrode current collector) electrically connected to the electrode terminal 210b and the connecting portion 210f3 of the electrode assembly 210f. The current collector 210e is made of aluminum, an aluminum alloy, copper, a copper alloy, or the like. The upper gasket 210c and the lower gasket 210d are sealing members having a flat plate shape and electrical insulation properties, which are disposed between the case lid portion 210a2 and the electrode terminal 210b and the current collector 210e. The upper gasket 210c and the lower gasket 210d are formed of, for example, any electrically insulating resin material or the like that can be used for the outer case 100 described above.

### [4 Description of configuration of spacer 220]

The configuration of the spacer 220 (the spacers 221 and 222) will be described next in detail. The plurality of spacers 221 all have the same configuration, and the configuration of the protruding portions formed on both surfaces of the spacer 222 in the Z-axis direction is the same as that of the spacer 221. Accordingly, in the following description, one spacer 221 will be shown and described as the configuration of the spacers 221 and 222.

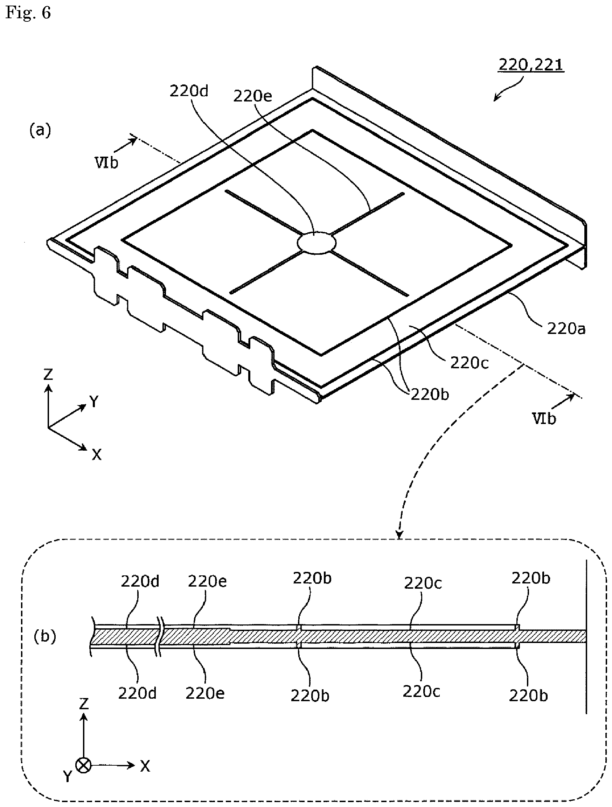

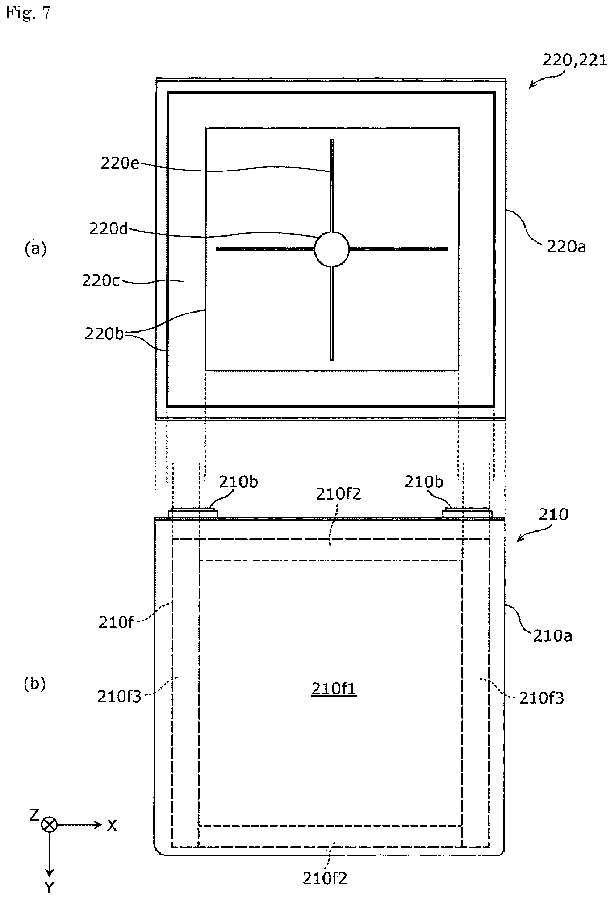

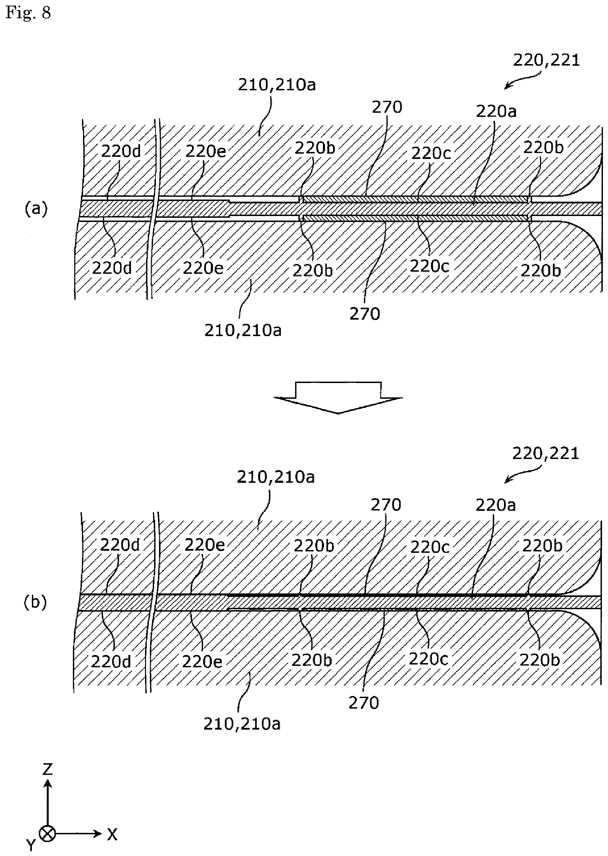

Fig. 6 is a perspective view and a cross-sectional view showing the configuration of the spacer 220 according to the embodiment. More specifically, (a) of Fig. 6 is a perspective view showing the configuration of the spacer 221 shown in Fig. 4, and (b) of Fig. 6 shows a configuration in a case where the spacer 221 shown in (a) of Fig. 6 is cut along a plane parallel to an XZ plane passing through a line VIb-VIb. Fig. 7 is a plan view showing the positional relationship between the configuration of the spacer 220 and the energy storage device 210 according to the present embodiment. More specifically, (a) of Fig. 7 is a plan view showing the configuration of the spacer 221, and (b) of Fig. 7 is a plan view showing the configuration of the energy storage device 210. Fig. 8 is a cross-sectional view showing a state where the spacer 220 and the energy storage device 210 according to the present embodiment are bonded to each other with an adhesive layer 270. More specifically, (a) of Fig. 8 is a cross-sectional view showing a state where the spacer 221 and the energy storage device 210 are bonded to each other at the time of assembling the energy storage apparatus 10, and (b) of Fig. 8 is a cross-sectional view showing a state where the spacer 221 and the energy storage device 210 are bonded to each other after the assembling of the energy storage apparatus 10 is completed or at the time of using the energy storage apparatus. Fig. 8 shows a cross section when cutting is performed at the same position as in Fig. 6(b).

As shown in these drawings, the spacer 220 (spacer 221) includes a spacer body 220a, a first protruding portion 220b, an adhesive layer disposition portion 220c, a second protruding portion 220d, and a third protruding portion 220e. The spacer 221 has a first protruding portion 220b, an adhesive layer disposition portion 220c, a second protruding portion 220d, and a third protruding portion 220e on both the surface on the Z-axis positive direction side and the surface on the Z-axis negative direction side of the spacer body 220a. Accordingly, the first protruding portion 220b, the adhesive layer disposition portion 220c, the second protruding portion 220d, and the third protruding portion 220e on the Z-axis positive direction side of the spacer body 220a will be described below, and a description on the Z-axis negative direction side will be omitted.

The spacer body 220a is a flat plate-like rectangular member which forms the body of the spacer 220 and is disposed so as to face a long side surface of the case 210a of the energy storage device 210 (see Figs. 4 and 8 and the like). That is, the spacer body 220a is disposed so as to be sandwiched between the long side surfaces of the cases 210a of the two energy storage devices 210.

The first protruding portion 220b is a protruding portion which protrudes from the spacer body 220a in the Z-axis positive direction. That is, the first protruding portion 220b protrudes toward the energy storage device 210 (more specifically, toward the long side surface of the case 210a of the energy storage device 210). More specifically, the first protruding portion 220b is a loop(square loop) rib (protrusion) formed so as to surround the peripheral portion of the spacer body 220a. In the present embodiment, the two loop first protruding portions 220b are disposed at intervals on the peripheral portion of the spacer body 220a.

The adhesive layer disposition portion 220c is a loop (square loop) recessed portion disposed between the two first protruding portions 220b, and the adhesive layer 270 (to be described later) is disposed (applied). That is, the first protruding portion 220b is disposed at a position adjacent to the adhesive layer disposition portion 220c in the intersecting direction intersecting the predetermined direction (Z-axis direction). In other words, the two first protruding portions 220b are disposed at positions sandwiching the adhesive layer disposition portion 220c in the intersecting direction. The intersecting direction is an arbitrary direction intersecting with the Z-axis direction, and is the X-axis direction and the Y-axis direction in the present embodiment. That is, in the X-axis direction and the Y-axis direction, the two first protruding portions 220b are disposed at positions sandwiching the adhesive layer disposition portion 220c.

As shown in Fig. 7, the energy storage device 210 includes the electrode assembly 210f in which the flat portion 210f1 is formed at a position facing the spacer 220. When viewed from the predetermined direction (the Z-axis direction), the inner first protruding portion 220b of the two first protruding portions 220b is disposed at a position overlapping the flat portion 210f1, but the outer first protruding portion 220b is disposed at a position not overlapping the flat portion 210f1. Accordingly, at least a part of the adhesive layer disposition portion 220c is disposed at a position not overlapping the flat portion 210f1 of the electrode assembly 210f when viewed from the predetermined direction (the Z-axis direction). In the present embodiment, when viewed from the predetermined direction (the Z-axis direction), at least a part (portions on both sides in the X-axis direction and on the Y-axis negative direction side) of the outer first protruding portion 220b is disposed at a position not overlapping the electrode assembly 210f. Accordingly, at least a part of the adhesive layer disposition portion 220c is disposed at a position not overlapping the electrode assembly 210f when viewed from the predetermined direction (the Z-axis direction).

Similarly to the first protruding portion 220b, the second protruding portion 220d is a protruding portion which protrudes from the spacer body 220a in the Z-axis positive direction. That is, the second protruding portion 220d is disposed at a position different from the position of the first protruding portion 220b and protrudes toward the energy storage device 210 (more specifically, toward the long side surface of the case 210a of the energy storage device 210). More specifically, the second protruding portion 220d is formed at a position inside the first protruding portion 220b so as to have a larger width in the X-axis direction or the Y-axis direction than the first protruding portion 220b and a smaller height in the Z-axis direction than the first protruding portion 220b. In the present embodiment, the second protruding portion 220d is a circular protruding portion which is formed on the central portion of the spacer body 220a, is disposed at a position facing the central portion of the energy storage device 210, and has a protrusion height lower than the protrusion height of the first protruding portion 220b.

Similarly to the first protruding portion 220b, the third protruding portion 220e is a protruding portion which protrudes from the spacer body 220a in the Z-axis positive direction. More specifically, the third protruding portion 220e is a linear rib (protrusion) which is disposed between the first protruding portion 220b and the second protruding portion 220d and protrudes toward the energy storage device 210 (more specifically, toward the long side surface of the case 210a of the energy storage device 210). In the present embodiment, the plurality of third protruding portions 220e are arranged to radially extend from the periphery of the second protruding portion 220d toward the first protruding portion 220b. More specifically, the four third protruding portions 220e are disposed, which extend from both ends of the second protruding portion 220d in the X-axis direction and both ends of the second protruding portion 220d in the Y-axis direction toward both sides in the X-axis direction and both sides in the Y-axis direction. The third protruding portion 220e is connected to the second protruding portion 220d and is not connected to the first protruding portion 220b. The third protruding portion 220e is formed to be larger in width than the first protruding portion 220b and to be lower in protrusion height than the first protruding portion 220b (to be lower in height in the Z-axis direction). In the present embodiment, the third protruding portion 220e has the same protrusion height as the second protruding portion 220d.

As shown in (a) of Fig. 8, the adhesive layer 270 is disposed on the adhesive layer disposition portion 220c between the two first protruding portions 220b. In the present embodiment, an adhesive agent is applied to the entire adhesive layer disposition portion 220c, and the adhesive layer 270 formed by curing the adhesive agent is disposed on the entire adhesive layer disposition portion 220c. As a result, the adhesive layer 270 becomes a loop (square loop) portion disposed between the two first protruding portions 220b. In the state shown in (a) of Fig. 8 (at the time of assembling the energy storage apparatus 10), the first protruding portion 220b is brought into contact with the case 210a of the energy storage device 210, but the second protruding portion 220d and the third protruding portion 220e are not brought into contact with the case 210a. As the adhesive agent used for the adhesive layer 270, for example, a gel-like resin material can be used, but a liquid material, a solid material such as a hot melt adhesive agent, or the like can also be used.

As described above, the first protruding portion 220b is a rib for disposing (applying) the adhesive layer 270 and is disposed at a position adjacent to the adhesive layer 270 in an intersecting direction (the X-axis direction in Fig. 8) intersecting the predetermined direction (the Z-axis direction). That is, the spacer 220 has the two first protruding portions 220b at positions sandwiching the adhesive layer 270 in the intersecting direction. The adhesive layer 270 is disposed between the energy storage device 210 and the spacer 220 to bond the energy storage device 210 and the spacer 220 to each other.

Further, as described with reference to Fig. 7, at least a part of the adhesive layer disposition portion 220c is disposed at a position not overlapping the flat portion 210f1 of the electrode assembly 210f when viewed from the predetermined direction (the Z-axis direction), and hence the adhesive layer 270 is disposed at a position where at least a part thereof does not overlap the flat portion 210f1. As described above, in the present embodiment, since at least a part of the adhesive layer disposition portion 220c is disposed at a position not overlapping the electrode assembly 210f when viewed from the predetermined direction (the Z-axis direction), the adhesive layer 270 is disposed at a position where at least a part thereof does not overlap the electrode assembly 210f.

As shown in Fig. 8(b), after the completion of assembly of the energy storage apparatus 10 or during use, the long side surface of the case 210a of the energy storage device 210 is brought close to the spacer 220 due to the dimensional tolerance of the parts, the expansion of the energy storage device 210, or the like. As a result, the first protruding portion 220b is compressed to decrease in protrusion height. Accordingly, the adhesive layer 270 is also compressed. However, the first protruding portion 220b and the adhesive layer 270 are suppressed from being compressed by the second protruding portion 220d and the third protruding portion 220e and have the same thickness as the second protruding portion 220d and the third protruding portion 220e in the Z-axis direction. As described above, the second protruding portion 220d and the third protruding portion 220e are protruding portions for suppressing crushing of the first protruding portion 220b and the adhesive layer 270.

### [5 Description of effects]

As has been described above, according to the energy storage apparatus 10 according to the embodiment of the present invention, the spacer 220 includes the first protruding portion 220b which is disposed at a position adjacent to the adhesive layer 270 which bonds the energy storage devices 210 and the spacer 220 to each other and the second protruding portion 220d which is lower in protrusion height than the first protruding portion 220b. As described above, since the first protruding portion 220b is disposed at the position adjacent to the adhesive layer 270, even when the thickness of the adhesive layer 270 varies due to dimensional tolerance or the like of the component at the time of assembling the energy storage apparatus 10, the variation can be absorbed by crushing the first protruding portion 220b. Further, even when the energy storage device 210 expands at the time of using the energy storage apparatus 10, the expansion of the energy storage device 210 can be absorbed as the first protruding portion 220b is crushed. Further, since the spacer 220 is provided with the second protruding portion 220d having a protrusion height lower than that of the first protruding portion 220b, it is possible to suppress the first protruding portion 220b from being crushed too much by the second protruding portion 220d. For this reason, it is possible to maintain an appropriate thickness of the adhesive layer 270 between the energy storage device 210 and the spacer 220, and it is possible to suppress the adhesive layer 270 from being excessively compressed or receiving a repeated stress in an excessively compressed state at the time of assembling and using the energy storage apparatus 10. With such a configuration, it is possible to improve adhesiveness between the energy storage device 210 and the spacer 220.

Since the central portion of the energy storage device 210 (the central portion of the long side surface of the case 210a) is likely to swell, the second protruding portion 220d of the spacer 220 is disposed at a position facing the central portion of the energy storage device 210. With such a configuration, it is possible to suppress the swelling of the central portion of the energy storage device 210, and hence it is possible to effectively suppress the excessive compression of the adhesive layer 270. By disposing the second protruding portion 220d at a position facing the central portion of the energy storage device 210, the adhesive layer 270 is disposed at a position not facing the central portion. The central portion of the energy storage device 210 is likely to repeatedly expand and contract due to charging and discharging. Therefore, by disposing the adhesive layer 270 at a position not facing the central portion, it is possible to suppress the adhesive layer 270 from receiving repeated stress due to the expansion and contraction of the energy storage device 210. With such a configuration, it is possible to improve adhesiveness between the energy storage device 210 and the spacer 220.

In addition, since the spacer 220 includes the two first protruding portions 220b at positions sandwiching the adhesive layer 270, it is possible to suppress the adhesive layer 270 from protruding from a predetermined position (between the two first protruding portions 220b). With such a configuration, the adhesive layer 270 can be disposed at an appropriate position by the two first protruding portions 220b, and hence adhesiveness between the energy storage device 210 and the spacer 220 can be enhanced.

The spacer 220 includes the third protruding portion 220e including a protrusion height lower than that of the first protruding portion 220b between the first protruding portion 220b and the second protruding portion 220d. As described above, the third protruding portion 220e, which is the protruding portion having the projection height lower than that of the first protruding portion 220b, is disposed in the spacer 220 in addition to the second protruding portion 220d. This can further suppress the first protruding portion 220b from being excessively crushed. As a result, it is possible to further suppress the adhesive layer 270 from being excessively compressed or receiving repeated stress in an excessively compressed state, and hence it is possible to enhance the adhesiveness between the energy storage device 210 and the spacer 220.

In the energy storage device 210, a portion of the electrode assembly 210f which faces the flat portion 210f1 is likely to expand with use, and expansion and contraction of the portion are likely to be repeated due to charging and discharging. Therefore, at least a part of the adhesive layer 270 is disposed at a position not overlapping the flat portion 210f1. With such a configuration, it is possible to prevent the adhesive layer 270 from being excessively compressed or receiving repeated stress due to the expansion of the energy storage device 210, and hence the adhesiveness between the energy storage device 210 and the spacer 220 can be enhanced.

In order to suppress swelling of the energy storage device 210, the central portion of the energy storage device 210 (a position corresponding to the flat portion 210f1 of the electrode assembly 210f) may be recessed during manufacturing. In this case, it is difficult to bond the central portion of the energy storage device 210 and the spacer 220 to each other. Therefore, by disposing the adhesive layer 270 at a position not facing the central portion (a position not overlapping the flat portion 210f1 of the electrode assembly 210f), the energy storage device 210 and the spacer 220 can be easily bonded to each other.

### [6 Description of modification example]

Although the energy storage apparatus 10 according to the embodiment of the present invention has been described above, the present invention is not limited to the present embodiment. That is, the embodiment disclosed herein is exemplary in all respects and not exhaustive, and the scope of the present invention is defined by the claims and includes all modifications within the meaning and scope equivalent to the claims.

For example, in the above embodiment, the first protruding portion 220b of the spacer 220 is a square loop rib formed so as to surround the peripheral portion of the spacer body 220a. However, the shape of the first protruding portion 220b is not particularly limited and may be a loop rib such as a circle, an ellipse, or an oval, a linear or curved rib instead of a loop rib, a strip-shaped protruding portion, or the like. The first protruding portion 220b may be disposed not in the peripheral portion of the spacer body 220a but in the central portion or the like. Instead of the two first protruding portions 220b being disposed on both sides of the adhesive layer disposition portion 220c (or the adhesive layer 270), only the one first protruding portion 220b may be disposed on one side of the adhesive layer disposition portion 220c (or the adhesive layer 270).

In the above embodiment, the second protruding portion 220d of the spacer 220 is a circular protruding portion formed at the central portion of the spacer body 220a. However, the shape of the second protruding portion 220d is not particularly limited and may be a shape other than a circular shape, such as a loop shape, a polygonal shape, a linear shape, or a curved shape. The second protruding portion 220d may be disposed on a peripheral portion of the spacer body 220a or the like, or a plurality of second protruding portions 220d may be disposed on the spacer 220.

In the above embodiment, the third protruding portion 220e of the spacer 220 is a linear rib radially extending from the second protruding portion 220d toward the first protruding portion 220b. However, the shape of the third protruding portion 220e is not particularly limited and may be a curved rib, a strip-shaped protruding portion, or the like. The third protruding portion 220e may be connected to the first protruding portion 220b, may not be connected to the second protruding portion 220d, may be disposed at any position between the first protruding portion 220b and the second protruding portion 220d, or may not be disposed between the first protruding portion 220b and the second protruding portion 220d. The number of third protruding portions 220e is not particularly limited, and only the one third protruding portion 220e may be disposed. The third protruding portion 220e may have a protrusion height higher or lower than that of the second protruding portion 220d. The spacer 220 may not be provided with the third protruding portion 220e.

In the above embodiment, the adhesive layer 270 is disposed over the entire adhesive layer disposition portion 220c. However, the adhesive layer 270 may be disposed only on a part of the adhesive layer disposition portion 220c.

In the above embodiment, at least portions of the adhesive layer disposition portions 220c and the adhesive layer 270 are disposed at positions not overlapping the flat portion 210f1 of the electrode assembly 210f of the energy storage device 210 when viewed from the predetermined direction. However, one or both of the adhesive layer disposition portion 220c and the adhesive layer 270 may be entirely disposed at a position overlapping the flat portion 210f1 when viewed from the predetermined direction.

In the above embodiment, any one of the plurality of spacers 220 (221, 222) may not have the above configuration. Similarly, any one of the plurality of energy storage devices 210 may not have the above configuration.

In addition, the energy storage apparatus 10 need not include all the constituent elements described above. For example, the energy storage apparatus 10 may not include the spacer 223, the side plate 243, the bus bar frame 260, the thermistor 252, the attachment member 300, the electric equipment 400, the relay 520, or the like.

A mode constructed by arbitrarily combining the constituent elements included in the above embodiment and the modification examples thereof is also included in the scope of the present invention.

The present invention can be implemented not only as the energy storage apparatus 10 but also as the spacer 220.

### INDUSTRIAL APPLICABILITY

The present invention can be applied to an energy storage apparatus including an energy storage device such as a lithium ion secondary battery.

### DESCRIPTION OF REFERENCE SIGNS

10: energy storage apparatus
100: outer case
200: energy storage unit
210: energy storage device
210a: case
210a1: case main body
210a2: case lid portion
210b: electrode terminal
210e: current collector
210f: electrode assembly
210f1: flat portion
210f2: curved portion
210f3: connecting portion
211: first energy storage device
212: second energy storage device
220, 221, 222, 223: spacer
220a: spacer body
220b: first protruding portion
220c: adhesive layer disposition portion
220d: second protruding portion
220e: third protruding portion
230, 231, 232: end plate
240, 241, 242, 243: side plate
250, 510: bus bar
270: adhesive layer

## Claims

1. An energy storage apparatus comprising:
an energy storage device;
a spacer disposed in a predetermined direction of the energy storage device; and
an adhesive layer which is disposed between the energy storage device and the spacer and bonds the energy storage device and the spacer to each other, wherein
the spacer includes:
a first protruding portion which is disposed at a position adjacent to the adhesive layer in an intersecting direction intersecting the predetermined direction and protrudes toward the energy storage device; and
a second protruding portion which is disposed at a position different from the first protruding portion, protrudes toward the energy storage device, and has a protrusion height lower than a protrusion height of the first protruding portion.

2. The energy storage apparatus according to claim 1, wherein the second protruding portion is disposed at a position facing a central portion of the energy storage device.

3. The energy storage apparatus according to claim 1 or 2, wherein the spacer includes the two first protruding portions at positions sandwiching the adhesive layer in the intersecting direction.

4. The energy storage apparatus according to any one of claims 1 to 3, wherein the spacer further includes a third protruding portion which is disposed between the first protruding portion and the second protruding portion and has a protrusion height lower than a protrusion height of the first protruding portion.

5. The energy storage apparatus according to any one of claims 1 to 4, wherein the energy storage device includes an electrode assembly including a flat portion formed at a position facing the spacer, and at least a part of the adhesive layer is disposed at a position not overlapping the flat portion when viewed from the predetermined direction.
